# EUROPEAN PATENT APPLICATION

(11) **EP 4 468 488 A1**
(43) Date of publication of application: **27.11.2024**
(21) Application number: 22922748.3
(22) Date of filing: 27.01.2022
(51) Int. Cl.: H01M 50/30

(54) **END CAP ASSEMBLY, BATTERY CELL, BATTERY AND POWER CONSUMING DEVICE**

(71) Applicant: Contemporary Amperex Technology Co., Limited, Ningde, Fujian 352100 (CN)
(72) Inventor: ZHOU, Wenlin, Ningde, Fujian 352100 (CN); ZHU, Yade, Ningde, Fujian 352100 (CN); LI, Quankun, Ningde, Fujian 352100 (CN); WANG, Peng, Ningde, Fujian 352100 (CN)
(74) Representative: Gong, Jinping
(86) International application number: PCT/CN2022/074428
(87) International publication number: WO 2023/141902

(57) **Abstract**

The embodiments of the present application provide an end cover assembly, a battery unit, a battery, and an electricity consuming apparatus. The end cover assembly includes an end cover, a pressure relief mechanism, and a protective sheet. The end cover includes a main body part and a protruding part which protrudes from the main body part along the thickness direction of the end cover. The end cover is provided with a through hole which passes through the main body part and the protruding part. The pressure relief mechanism is disposed on a side of the main body part away from the protruding part and covers the through hole. The pressure relief mechanism is configured to activate to release the internal pressure through the through hole when the internal pressure of the battery unit reaches a threshold. The protective sheet is attached to a surface of the protruding part away from the main body part and covers the through hole. The protruding part includes a first convex part and a second convex part. The first convex part is arranged around the through hole, the second convex part is arranged around the outer side of the first convex part, and a first concave part is formed between the first convex part and the second convex part. The first concave part communicates the through hole with the external space of the end cover. The present application can reduce the risk of the corrosion of the pressure relief mechanism and improve the safety.

## Description

### TECHNICAL FIELD

The present application relates to the field of battery technology, and more specifically, to an end cover assembly and its manufacturing method and system, a battery unit, a battery, and an electricity consuming apparatus.

### BACKGROUND

The battery unit is widely used in electronic devices, such as mobile phones, laptops, battery cars, electric cars, electric aircraft, electric boats, electric toy cars, electric toy boats, electric toy planes and electric tools. The battery unit can include cadmium nickel battery unit, hydrogen nickel battery unit, lithium-ion battery unit, and secondary alkaline zinc manganese battery unit.

In the development of battery technology, how to improve the safety of the battery unit is a research direction.

### SUMMARY

The present application provides an end cover assembly, a manufacturing method and a manufacturing system thereof, a battery unit, a battery, and an electricity consuming apparatus, which can improve the safety of the battery unit.

In a first aspect, the embodiments of the present application provide an end cover assembly of a battery unit, including an end cover, a pressure relief mechanism, and a protective sheet. The end cover includes a main body part and a protruding part which protrudes from the main body part along the thickness direction of the end cover. The end cover is provided with a through hole which passes through the main body part and the protruding part. The pressure relief mechanism is disposed on a side of the main body part away from the protruding part and covers the through hole. The pressure relief mechanism is configured to activate to release the internal pressure through the through hole when the internal pressure of the battery unit reaches a threshold. The protective sheet is attached to a surface of the protruding part away from the main body part and covers the through hole. The protruding part includes a first convex part and a second convex part. The first convex part is arranged around the through hole, the second convex part is arranged around the outer side of the first convex part, and a first concave part is formed between the first convex part and the second convex part. The first concave part communicates the through hole with the external space of the end cover.

In the present application, both the first convex part and the second convex part protrude from the main body part, and both together can serve as a double-layer protection to reduce the risk of external impurities entering the through hole. The first concave part communicates the through hole with the external space of the end cover, which can ensure the accuracy of the airtightness detection of the battery unit. When external impurities accumulate or pass through the second convex part due to the vibration of the battery unit, the first concave part can accommodate the external impurities passing through the second convex part, thereby playing a storage function, increasing the difficulty of external impurities entering the through hole, reducing the risk of the corrosion of the pressure relief mechanism, and improving the safety.

In some embodiments, a first groove is provided on a surface of the first convex part away from the main body part, and the first groove is used to communicate the through hole with the first concave part. A second groove is arranged on a surface of the second convex part away from the main body part, and the second groove is used to communicate the first concave part with the external space of the end cover.

In the above embodiment, the first groove, the first concave part, and the second groove form a channel that communicates the through hole with the external space to facilitate gas tightness detection of the battery unit. The first groove and the second groove are recessed from the top of the first convex part and the top of the second convex part, respectively, so as to ensure the distance between the first groove and the main body part in the thickness direction and the distance between the second groove and the main body part in the thickness direction, reducing the risk of external impurities passing through the second groove and the first groove.

In some embodiments, in the thickness direction, the depth of the first groove and the depth of the second groove are both smaller than the depth of the first concave part.

In the above embodiments, the first concave part has a larger depth, which can reserve more accommodating space for external impurities; The depth of the first groove and the depth of the second groove are both smaller, which can increase the difficulty of external impurities passing through the first and second convex parts and reduce the risk of external impurities entering the through hole.

In some embodiments, the first and second grooves are staggered in the circumferential direction of the through hole.

The above embodiments can increase the circumferential distance between the first and second grooves, extend the path for external impurities to move from the second groove to the first groove, and increase the difficulty of external impurities to enter the through hole.

In some embodiments, the staggered angle between the first and second grooves in the circumferential direction of the through hole is 90 ° -180 °.

The above embodiments can ensure the circumferential spacing between the first and second grooves, increasing the difficulty of external impurities entering the through hole.

In some embodiments, the main body part is provided with a liquid injection hole which is used to inject the electrolyte into the battery unit. The first groove is located between the through hole and the liquid injection hole, and the second groove is located on the side of the through hole away from the liquid injection hole.

In the above embodiments, the second groove is arranged on a side of the through hole away from the liquid injection hole, so that the electrolyte splashed out from the liquid injection hole will be blocked by the second convex part and the protective sheet, causing the electrolyte does not splash into the second groove easily, reducing the risk of electrolyte entering the through hole, and improving the safety of the battery unit.

In some embodiments, the protective sheet includes a base layer and a bonding layer, the base layer covers the through hole, and the bonding layer is disposed on the surface of the base layer facing the protruding part and bonded to the first convex part and the second convex part. The area of the base layer opposite the first groove in the thickness direction is not provided with the bonding layer, and the area of the base layer opposite the second groove in the thickness direction is not provided with the bonding layer.

The above embodiments dispose the first groove and the bonding layer in a staggered manner, and dispose the second groove and the bonding layer in a staggered manner, which can reduce the risk of the bonding layer blocking the first groove and the second groove.

In some embodiments, the first concave part includes a first part and a second part arranged along the circumferential direction of the through hole, the first part being used for communicating with the first groove, and the second part being used for communicating with the second groove. In the thickness direction, the depth of the first part is smaller than that of the second part.

In the above embodiments, external impurities will first enter the second part through the second groove. Due to the depth of the second part being greater than the depth of the first part, external impurities will first accumulate in the second part, and do not directly enter the first part easily. This can increase the difficulty of external impurities entering the through hole through the first groove, reduce the risk of the corrosion of the pressure relief mechanism, and improve the safety.

In some embodiments, the first concave part includes a third part, which communicates the first part with the second part. In the thickness direction, the depth of the third part is greater than that of the first part and less than that of the second part.

In the above embodiments, the bottom surface of the first concave part forms multiple steps, so that the difficulty of impurities moving in the direction close to the first groove within the first concave part gradually increases, thereby reducing the difficulty of impurities entering the through hole through the first groove, reducing the risk of the corrosion of the pressure relief mechanism, and improving the safety.

In some embodiments, the depth of at least a portion of the first part gradually decreases in the direction close to the first groove in the circumferential direction of the through hole.

In the above embodiments, even if external impurities enter the first part, the difficulty of impurities moving in the direction close to the first groove in the first part gradually increases, thereby reducing the difficulty of impurities entering the through-hole through the first groove, reducing the risk of the corrosion of the pressure relief mechanism, and improving the safety.

In some embodiments, the depth of at least a portion of the first concave part gradually decreases along the direction close to the first groove in the circumferential direction of the through hole.

In the above embodiments, even if external impurities enter the first concave part, the difficulty of the impurities moving toward a direction close to the first groove in the first concave part gradually increases, thereby reducing the difficulty of impurities entering the through hole through the first concave part, reducing the risk of the corrosion of the pressure relief mechanism, and improving the safety.

In some embodiments, the surface of the first convex part away from the main body part is flush with the surface of the second convex part away from the main body part, in order to facilitate the attachment of the protective sheet to the first convex part and the attachment of the protective sheet to the second convex part.

In some embodiments, at least a portion of the first concave part is recessed into the main body part.

The above embodiments can increase the depth of the first concave part, reserve more accommodating space for external impurities, increase the difficulty of external impurities entering the through hole, reduce the risk of the corrosion of the pressure relief mechanism, and improve the safety.

In some embodiments, the protective sheet covers the first concave part to reduce the risk of external impurities directly entering the first concave part.

In a second aspect, the embodiments of the present application provide a battery unit, including a shell, an electrode assembly, and an end cover assembly of any embodiment in the first aspect. The shell has an opening. The electrode assembly is housed within the shell. The end cover of the end cover assembly is used to cover and close the opening, and the protruding part is located on the side of the main body away from the electrode assembly.

In a third aspect, the embodiments of the present application provide a battery, including multiple battery units in the second aspect.

In a fourth aspect, the embodiments of the present application provide an electricity consuming apparatus, including a battery unit in the second aspect, which is used to provide electrical energy.

In a fifth aspect, the embodiments of the present application provide a manufacturing method for an end cover assembly, comprising steps of:

providing an end cover, which includes a main body part and a protruding part. The protruding part protrudes from the main body part along the thickness direction of the end cover, and the end cover is provided with a through hole. The through hole passes through the main body part and the protruding part, and the protruding part includes a first convex part and a second convex part. The first convex part is arranged around the through hole, the second convex part is arranged around the outer side of the first convex part, and a first concave part is formed between the first convex part and the second convex part. The first concave part communicates the through hole with the external space of the end cover;

providing a pressure relief mechanism. The pressure relief mechanism is disposed on a side of the main body part away from the protruding part, with the pressure relief mechanism covering the through hole;

providing a protective sheet. The protect sheet is attached to the surface of the protruding part away from the main body part and the protective sheet covers the through hole;

wherein the pressure relief mechanism is configured to activate to release the internal pressure through the through hole when the internal pressure of the battery unit reaches a threshold.

In a sixth aspect, the embodiments of the present application provide a manufacturing system for an end cover assembly, including a first providing device, a second providing device, and a third providing device. The first provision device is used to provide an end cover, which includes a main body part and a protruding part. The protruding part protrudes from the main body part along the thickness direction of the end cover, and the end cover is provided with a through hole, which passes through the main body part and the protruding part. The protruding part includes a first convex part and a second convex part, the first convex part is arranged around the through hole, the second convex part is arranged around the outer side of the first convex part, and a first concave part is formed between the first convex part and the second convex part. The first concave part communicates the through hole with the external space of the end cover. The second provision device is used to provide a pressure relief mechanism, and the pressure relief mechanism is disposed on the side of the main body part away from the protruding part, and the pressure relief mechanism covers the through hole. The third provision device is used to provide a protective sheet and the protective sheet is attached to the surface of the protruding part away from the main body part, and the protective sheet covers the through hole. The pressure relief mechanism is configured to activate to release the internal pressure through the through hole when the internal pressure of the battery unit reaches a threshold.

### BRIEF DESCRIPTION OF THE DRAWINGS

In order to provide a clearer explanation of the technical solution of the embodiments of the present application, a brief introduction will be given to the accompanying drawings required in the embodiments of the present application. It is obvious that the accompanying drawings described below are only some embodiments of the present application. For the skilled person in the art, other accompanying drawings can be obtained based on the drawings without any creative effort.
Fig. 1 is a structural schematic diagram of the vehicle provided in some embodiments of the present application;
Fig. 2 is an explosive schematic diagram of the battery provided in some embodiments of the present application;
Fig. 3 is an explosive schematic diagram of the battery module shown in Fig. 2;
Fig. 4 is an explosive schematic diagram of the battery unit provided in some embodiments of the present application;
Fig. 5 is a structural schematic diagram of the end cover assembly provided in some embodiments of the present application;
Fig. 6 is a cross-sectional schematic diagram of the end cover assembly provided in some embodiments of the present application;
Fig. 7 is an enlarged schematic diagram of the end cover assembly shown in Fig. 6 at circular frame A;
Fig. 8 is an enlarged schematic diagram of Fig. 7 at circular frame B;
Fig. 9 is an enlarged schematic diagram of Fig. 7 at circular frame C;
Fig. 10 is a structural schematic diagram of the protective sheet provided in some embodiments of the present application;
Fig. 11 is a schematic diagram of a top view of the end cover of the end cover assembly provided in some embodiments of the present application;
Fig. 12 is an enlarged schematic diagram of Fig. 11 at circular frame D;
Fig. 13 is a sectional schematic diagram taken along the section line E-E in Fig. 12;
Fig. 14 is another sectional schematic diagram taken along the section line E-E in Fig.12;
Fig. 15 is a flowchart illustrating the manufacturing method of the end cover assembly provided in some embodiments of the present application;
Fig. 16 is a schematic block diagram of a manufacturing system for end cover assembly provided in some embodiments of the present application.

In the accompanying drawings, they are not drawn to the actual scale.

### DETAILED DESCRIPTION

In order to make the purpose, technical solution, and advantages of the embodiments of the present application clearer, the technical solution in the embodiments of the present application will be clearly described below in conjunction with the accompanying drawings. Obviously, the described embodiments are a part of the embodiments of the present application, not all of them. Based on the embodiments in the present application, all other embodiments obtained by the skilled person in the art without creative labor fall within the scope of protection in the present application.

Unless otherwise defined, all technical and scientific terms used in the present application have the same meanings as those commonly understood by the skilled person in the art of the present application; The terms used in the specification of the present application are only for the purpose of describing specific embodiments and are not intended to limit the present application; The terms "including" and "having" in the description and claims of the present application, as well as in the description of the accompanying drawings, and any variations thereof, are intended to cover non-exclusive inclusion. The terms "first", "second", etc. in the description and claims of the present application or the accompanying drawings are used to distinguish different objects, rather than to describe specific sequences or primary and secondary relationships.

Referring to "embodiments" in the present application means that specific features, structures, or characteristics described in conjunction with the embodiments can be included in at least one embodiment of the present application. The phrase appearing in various positions in the specification does not necessarily refer to the same embodiment, nor is it an independent or alternative embodiment that is mutually exclusive with other embodiments.

In the description of the present application, it should be noted that unless otherwise specified and limited, the terms "install", "connected", "connect", and "attach" should be broadly understood. For example, it can be fixed connections, detachable connections, or integrated connections; it can be directly connected, or indirectly connected through an intermediate medium, or it can be the communication of the internal of the two components. For the skilled person in the art, the specific meanings of the above terms in the present application can be understood based on specific circumstances.

In the present application, the term 'and/or' is only a description of the association relationship of the associated object, indicating that there can be three types of relationships, such as A and/or B, which can indicate the existence of A alone, the existence of A and B simultaneously, and the existence of B alone. In addition, the character "/" in the present application generally indicates that the associated object is an "or" relationship.

In the embodiments of the present application, the same reference signs represent the same components, and for simplicity, detailed descriptions of the same components are omitted in different embodiments. It should be understood that the thickness, length, width, and other dimensions of various components, as well as the overall thickness, length, width, and other dimensions of the integrated device, in the embodiments of the present application shown in the accompanying drawings are only illustrative examples and should not constitute any limitations for the present application.

The term 'multiple' in the present application refers to two or more (including two).

In the present application, the battery unit can include a lithium ion secondary battery unit, a lithium ion primary battery unit, a lithium sulfur battery unit, a sodium lithium ion battery unit, a sodium ion battery unit or a magnesium ion battery unit, and the embodiment of the present application does not limit this. The battery unit can be cylinder, flat, rectangular cuboid or other shapes, and the embodiment of the present application does not limit this.

The battery mentioned in the embodiment of the present application refers to a single physical module that includes one or more battery units to provide higher voltage and capacity. For example, the battery mentioned in the present application may include a battery module or a battery pack, etc. The battery generally include a casing used to encapsulate one or more battery units. The casing can prevent liquids or other foreign objects from affecting the charging or discharging of the battery unit.

The battery unit includes an electrode assembly and an electrolyte, and the electrode assembly includes a positive electrode plate, a negative electrode plate and a separator. The battery unit mainly rely on metal ions moving between the positive and negative electrode plates to operate. The positive electrode plate includes a positive current collector and a positive active substance layer which is coated on the surface of the positive current collector; The positive current collector includes a positive coating area and a positive tab connected to the positive coating area. The positive coating area is coated with a positive active substance layer, while the positive tab is not coated with a positive active substance layer. Taking lithium ion battery unit as an example, the material of positive current collector can be aluminum, the positive active material layer includes positive active material, and the positive active material can be lithium cobalate, lithium iron phosphate, ternary lithium or lithium manganate, etc. The negative electrode plate includes a negative current collector and a negative active material layer which is coated on the surface of the negative current collector; The negative current collector includes a negative coating area and a negative tab connected to the negative coating area. The negative coating area is coated with a negative active substance layer, while the negative tab is not coated with a negative active substance layer. The material of the negative current collector can be copper, and the negative active material layer includes the negative active material. The negative active material can be carbon or silicon, etc. The material of the separator can be PP (polypropylene) or PE (polyethylene), etc.

The battery unit also includes a shell, and a housing cavity is formed inside the shell to accommodate the electrode assembly. The shell can protect the electrode assembly from the outside to prevent external foreign objects from affecting the charging or discharging of the electrode assembly. For example, the shell includes a casing and an end cover, the casing has an opening, and the end cover covers and closes the opening of the casing.

The development of battery technology requires simultaneous consideration of various design factors, such as energy density, cycle life, discharge capacity, charge discharge rate, and other performance parameters. In addition, the safety of the battery also needs to be considered.

The pressure relief mechanism on the battery unit has a significant impact on the safety of the battery unit. For example, in case of short circuit, overcharge and other phenomena, thermal runaway may occur inside the battery unit, resulting in sudden pressure rise. In this case, the internal pressure can be released outward through the actuation of the pressure relief mechanism to prevent the explosion and fire of the battery unit.

The pressure relief mechanism refers to an element or component that is activated to release internal pressure when the internal pressure of a battery unit reaches a predetermined threshold. The threshold design varies depending on the design requirements. The threshold may depend on one or more materials in the positive electrode plate, negative electrode plate, electrolyte, and the separator of the battery unit.

The pressure relief mechanism can be in the form of explosion-proof valves, gas valves, pressure relief valves, or safety valves, and can specifically use pressure-sensitive components or structures, that is, when the internal pressure of the battery unit reaches a predetermined threshold, the pressure relief mechanism executes an action or the thin weak area provided in the pressure relief mechanism ruptures, thereby forming an opening or channel for releasing internal pressure.

The term "actuate" mentioned in the present application refers to the action or activation of the pressure relief mechanism to a certain state, thereby allowing the internal pressure of the battery unit to be released. The actions generated by the pressure relief mechanism can include but are not limited to: at least a portion of the pressure relief mechanism is ruptured, broken, torn or opened, and so on. When the pressure relief mechanism is activated, the high temperature and high pressure substances inside the battery unit will be discharged outward from the activated part as emissions. In this way, the battery unit can be depressurized under controllable pressure, thereby avoiding potential more serious accidents.

The emissions from the battery unit mentioned in the present application include but are not limited to: electrolyte, dissolved or split positive and negative electrode plates, fragments of the separator, high temperature and high pressure gases generated by reactions, flames, and so on.

In related technology, a through hole is provided on the end cover for exhausting, and a pressure relief mechanism is installed on the inner side of the end cover and covers the through hole. When the pressure relief mechanism is activated, high-temperature and high-pressure substances are discharged to the outside of the battery unit through the through hole.

In order to reduce external impurities entering the through hole and reduce the risk of corrosion of the pressure relief mechanism by external impurities, the inventor attached a protective sheet for covering the through hole from the outer side on the outer side of the end cover to reduce impurities entering the through hole. The protective film is a thin film structure with low strength. When the pressure relief mechanism is activated, the protective film is easily broken by high temperature and high pressure substances, and will not block the discharge of high temperature and high pressure substances.

During the production process of the battery unit, the pressure relief mechanism may be damaged, leading to the failure of the pressure relief mechanism; When sealing testing is performed on the battery unit, it is not possible to accurately detect the failure of the pressure relief mechanism due to the protective sheet covering the through hole from the outside. The inventor attempted to dispose an air guide groove on the end cover to communicate the through hole with the external space of the battery unit, so that the failure of the pressure relief mechanism can be accurately detected during air tightness testing.

However, the inventor found that during the production and use of the battery unit, external impurities, such as metal particles, electrolyte, etc., may enter the through hole through the air guide groove, posing a risk of corrosion of the pressure relief mechanism, leading to the failure of the pressure relief mechanism and causing a safety hazard.

In view of this, embodiments of the present application provide an end cover assembly of a battery unit, which includes an end cover, a pressure relief mechanism and a protective sheet. The end cover includes a main body part and a protruding part which protrudes from the main body part along a thickness direction of the end cover. The end cover is provided with a through hole which passes through the main body part and the protruding part. The pressure relief mechanism is disposed on a side of the main body part away from the protruding part and covers the through hole. The pressure relief mechanism is configured to activate to release the internal pressure through the through hole when the internal pressure of the battery unit reaches a threshold. The protective sheet is attached to a surface of the protruding part away from the main body part and covers the through hole. The protruding part includes a first convex part and a second convex part. The first convex part is arranged around the through hole, the second convex part is arranged around the outer side of the first convex part, and a first concave part is formed between the first convex part and the second convex part. The first concave part communicates the through hole with the external space of and the end cover. In the present application, the first convex part and the second convex part can serve as double-layer protection to reduce the risk of external impurities entering the through hole, while the first concave part can accommodate external impurities passing through the second convex part, which can play a storage function, increase the difficulty of external impurities entering the through hole, reduce the risk of corrosion of the pressure relief mechanism, and improve safety.

The end cover assembly described in the embodiment of the present application is applicable to the battery unit, the battery, and the electricity consuming apparatus using the battery.

The electricity consuming apparatus can be vehicle, mobile phone, portable device, laptop, ship, spacecraft, electric toy, electric tool, and so on. The vehicle can be a fuel powered vehicle, a gas powered vehicle, or a new energy vehicle. The new energy vehicle can be a pure electric vehicle, a hybrid electric vehicle, or an extended range vehicle, etc.; The spacecraft includes airplane, rocket, space shuttle, and spacecraft, etc.; The electric toy includes fixed or mobile electric toy, such as game machine, electric car toy, electric boat toy, electric aircraft toys, etc.; The electric tool includes metal cutting electric tool, grinding electric tool, assembly electric tool and railway electric tool, such as electric drill, electric bench grinder, electric wrench, electric screwdriver, electric hammer, impact drill, concrete vibrator and electric planer. The implementation example of the present application does not impose special restrictions on the above-mentioned electricity consuming apparatuses.

For the convenience of explanation, the following embodiments take the vehicle as an example for the electricity consuming apparatus.

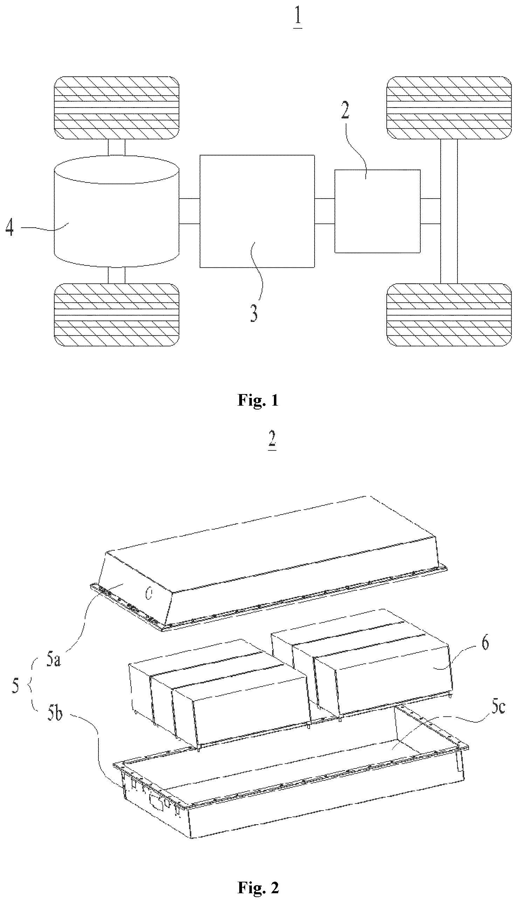

Fig. 1 is a structural schematic diagram of the vehicle provided in some embodiments of the present application.

As shown in Fig. 1, the interior of vehicle 1 is provided with a battery 2 which can be installed at the bottom, head, or tail of the vehicle 1. The battery 2 can be used for the power supply of vehicle 1, for example, the battery 2 can serve as the operating power supply of vehicle 1.

The vehicle 1 may further include a controller 3 and a motor 4. The controller 3 is used to control the battery 2 to supply power to the motor 4, for example, for the operating power requirements at the starting, navigating and traveling of vehicle 1.

In some embodiments of the present application, the battery 2 can not only serve as the operating power source for the vehicle 1, but also as the driving power source for the vehicle 1, replacing or partially replacing the fuel or the natural gas to provide driving power for the vehicle 1.

Fig. 2 is an explosive schematic diagram of the battery provided in some embodiments of the present application.

As shown in Fig. 2, the battery 2 includes a pack case 5 and a battery unit (not shown) which is accommodated within the pack case 5.

The pack case 5 is used to accommodate the battery unit, and can be of various structures. In some embodiments, the pack case 5 may include a first pack case part 5a and a second pack case part 5b, with the first pack case part 5a and the second pack case part 5b covering and closing each other. The first pack case part 5a and the second pack case part 5b jointly define an accommodating space 5c for accommodating the battery unit. The second pack case part 5b can be a hollow structure with an opening at one end, the first pack case part 5a is a plate-shaped structure, and the first pack case part 5a covers and closes the opening side of the second pack case part 5b to form a pack case 5 with an accommodating space 5c; The first pack case part 5a and the second pack case part 5b can also be hollow structures with an opening on one side. The opening side of the first pack case part 5a covers and closes the opening side of the second pack case part 5b to form a pack case 5 with an accommodating space 5c. Of course, the first pack case part 5a and the second pack case part 5b may be of various shapes, such as a cylinder, a rectangular cuboid, etc.

In order to improve the sealing performance after connecting the first pack case part 5a and the second pack case part 5b, sealing member such as sealant, sealing rings, etc. can further be installed between the first pack case part 5a and the second pack case part 5b.

Assuming that the first pack case part 5a covers and closes the top of the second pack case part 5b, the first pack case part 5a can also be referred to as the upper pack cover, and the second pack case part 5b can also be referred to as the lower pack cover.

In the battery 2, the battery unit can be one or multiple. If there are multiple battery units, they can be connected in series, parallel, or hybrid. Hybrid connection refers to both series and parallel connection among multiple battery units. Multiple battery units can be directly connected together in series, parallel, or hybrid, and the whole composed of multiple battery units can be accommodated in the pack case 5; Of course, multiple battery units can also be connected in series, parallel, or hybrid to form a battery module 6. Multiple battery modules 6 can then be connected in series, parallel, or hybrid to form a whole and housed in the pack case 5.

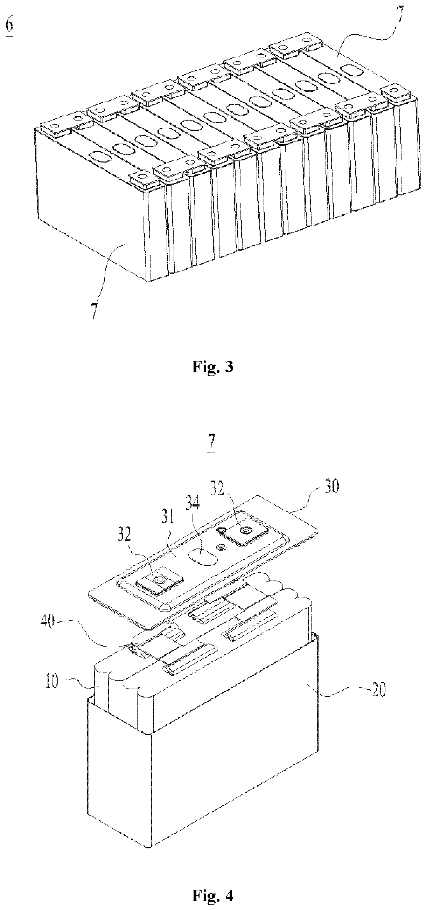

Fig. 3 is an explosive schematic diagram of the battery module shown in Fig. 2.

In some embodiments, as shown in Fig. 3, there are multiple battery units 7, which are first connected in series, parallel, or hybrid to form a battery module 6. Multiple battery modules 6 are then connected in series, parallel, or hybrid to form a whole and housed within the pack case.

Multiple battery units 7 in the battery module 6 can be electrically connected through a bus component to achieve parallel, series, or hybrid connection of multiple battery units 7 in the battery module 6.

Fig. 4 is an explosive schematic diagram of the battery unit provided in some embodiments of the present application.

As shown in Fig. 4, the battery unit 7 includes an electrode assembly 10, a shell 20, and an end cover assembly 30. The shell 20 has an opening, and the electrode assembly 10 is accommodated within the shell 20. End cover assembly 30 includes an end cover 31 which is used to cover and close the opening.

The electrode assembly 10 is the core component of the battery unit 7 to achieve charging and discharging functions, which includes a positive electrode plate, a negative electrode plate and a separator. The polarity of the positive electrode plate is opposite to the polarity of the negative electrode plate, and the separator is used to separate and insulate the positive electrode plate from the negative electrode plate. The electrode assembly 10 mainly relies on the movement of metal ions between the positive and negative electrode plates for operation.

The electrode assembly 10 can be one or multiple. When there are multiple electrode assemblies 10, multiple electrode assemblies 10 can be arranged in layers. Exemplarily, as shown in Fig. 4, there are four electrode assemblies 10.

The shell 20 is a hollow structure which internally forms a cavity for accommodating the electrode assembly 10 and the electrolyte. The shell 20 may be of various shapes, such as a cylinder, a rectangular cuboid, and the like. The shape of the shell 20 can be determined based on the specific shape of the electrode assembly 10. For example, if the electrode assembly 10 is a cylindrical structure, a cylindrical shell can be selected; If the electrode assembly 10 is a rectangular cuboid structure, a rectangular cuboid shell can be selected.

The shell 20 can be a structure with an opening on one side, and one end cover 31 is provided to cover and close the opening of the shell 20. Alternatively, the shell 20 can also be a structure with openings on both sides, two end covers 31 are provided to cover and close the two openings of the shell 20 respectively.

Exemplarily, the end cover 31 is connected to the shell 20 by welding, bonding, clamping or other means.

The shape of the end cover 31 can be adapted to the shape of the shell 20 to engage the shell 20. Optionally, the end cover 31 can be made of a material with a certain hardness and strength (such as aluminum alloy), so that it is less prone to deformation when subjected to extrusion and collision, enabling the battery unit 7 to have higher structural strength and improve safety performance. The material of the end cover 31 can also be various, such as copper, iron, aluminum, stainless steel, aluminum alloy, plastic, etc. The embodiments of the present application does not impose special restrictions on this.

In some embodiments, the end cover assembly 30 further includes two electrode terminals 32 which can be provided on the end cover 31. The two electrode terminals 32 are positive electrode terminals and negative electrode terminals, respectively. The positive electrode terminal is used for electrical connection with the positive electrode plate of the electrode assembly 10, and the negative electrode terminal is used for electrical connection with the negative electrode plate to lead the electrical energy generated by the electrode assembly 10 out of the shell 20.

In some embodiments, each electrode terminal 32 is provided with a corresponding connection member 40, or can also be referred to as a current collecting member, located between the end cover 31 and the electrode assembly 10, for electrically connecting the electrode terminal 32 and the corresponding electrode plate.

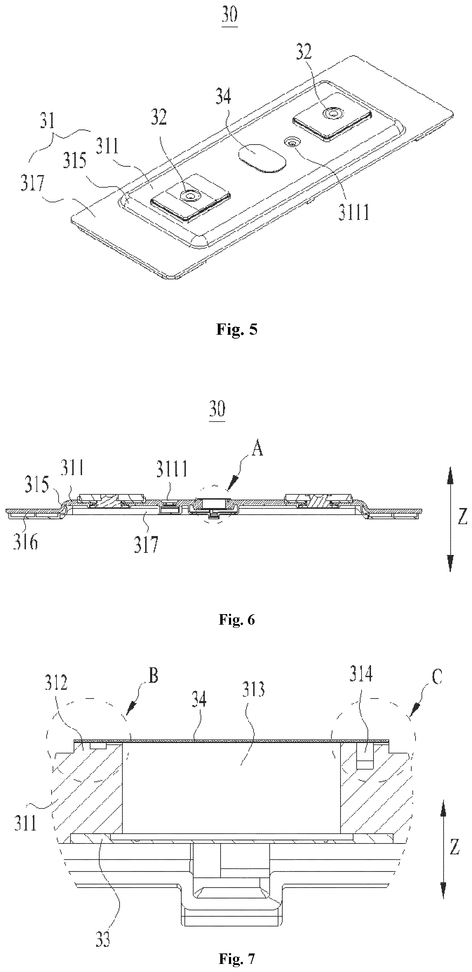

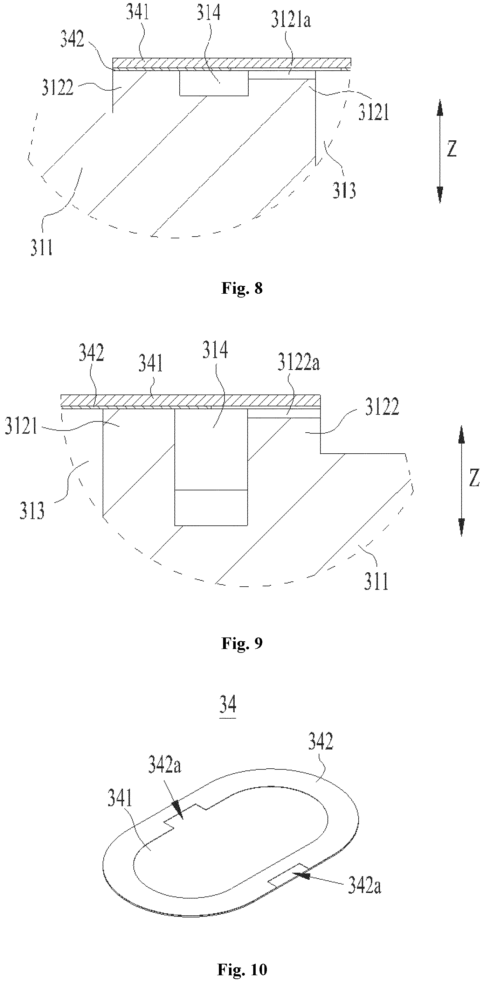

Fig. 5 is a structural schematic diagram of the end cover assembly provided in some embodiments of the present application; Fig. 6 is a cross-sectional schematic diagram of the end cover assembly provided in some embodiments of the present application; Fig. 7 is an enlarged schematic diagram of the end cover assembly shown in Fig. 6 at circular frame A; Fig. 8 is an enlarged schematic diagram of Fig. 7 at circular frame B; Fig. 9 is an enlarged schematic diagram of Fig. 7 at circular frame C.

As shown in Figs. 5 to 9, the end cover assembly 30 of the embodiment of the present application includes an end cover 31, a pressure relief mechanism 33 and a protective sheet 34. The end cover 31 includes a main body part 311 and a protruding part 312 which protrudes from the main body part 311 along a thickness direction Z of the end cover 31. The end cover 31 is provided with a through hole 313 which passes through the main body part 311 and the protruding part 312. The pressure relief mechanism 33 is located on a side of the main body part 311 away from the protruding part 312 and covers the through hole 313. The pressure relief mechanism 33 is configured to activate to release the internal pressure through the through hole 313 when the internal pressure of the battery unit 7 reaches a threshold. The protective sheet 34 is attached to a surface of the protruding part 312 away from the main body part 311 and covers the through hole 313. The protruding part 312 includes a first convex part 3121 and a second convex part 3122. The first convex part 3121 is arranged around the through hole 313, the second convex part 3122 is arranged around the outer side of the first convex part 3121, and a first concave part 314 is formed between the first convex part 3121 and the second convex part 3122. The first concave part 314 communicates the through hole 313 with the external space of the end cover 31.

The main body part 311 has an inner surface and an outer surface arranged opposite in the thickness direction Z, with the inner surface of the main body part 311 facing the electrode assembly 10, and the outer surface of the main body part 311 facing away from the electrode assembly 10. Exemplarily, the inner surface of the main body part 311 and the outer surface of the main body part 311 are both planar. The protruding part 312 protrudes from the outer surface of the main body part 311.

The protruding part 312 is a circular structure arranged around the through hole 313, and the protruding part 312 encloses and forms a part of the through hole 313.

The shape of the through hole 313 can be circular, square, runway shaped, or other shapes. Exemplarily, the through hole 313 can be an equal diameter hole or a variable diameter hole such as a step hole.

The pressure relief mechanism 33 is connected to the main body part 311 and covers the through hole 313. In the battery unit 7, the pressure relief mechanism 33 can seal the through hole 313 to separate the space on the inner side of the end cover 31 from the space on the outer side of the end cover 31, so as to prevent the electrolyte from flowing out through the through hole 313, and improve the sealing performance of the battery unit.

The pressure relief mechanism 33 and the end cover 31 can be two members provided separately, and the two members can be fixed and connected by welding, bonding, or other connection methods. Alternatively, the pressure relief mechanism 33 and the end cover 31 can also be an integrated structure.

The pressure relief mechanism 33 can be a variety of possible pressure relief structures, and the embodiments of the present application do not limit this. For example, the pressure relief mechanism 33 can be a pressure sensitive pressure relief mechanism which is configured to rupture when the internal pressure of the battery unit 7 provided with the pressure relief mechanism 33 reaches a threshold.

In the description of the embodiment, attachment refers to affixing and connecting; If one member is attached to another member, the two members are in a connected state at contact surface thereof. Exemplarily, the protective sheet 34 can be attached to the protruding part 312 by bonding or other means.

The protective sheet 34 can cover the through hole 313 on a side of the protruding part 312 away from the main body part 311 to block external impurities and reduce the risk of external impurities entering the through hole 313.

The first concave part 314 is recessed relative to a surface of the first convex part 3121 away from the main body part 311, and is recessed relative to a surface of the second convex part 3122 away from the main body part 311; In other words, both the first convex part 3121 and the second convex part 3122 protrude from the bottom surface of the first concave part 314.

The first concave part 314 communicates the through hole 313 with the external space of the end cover 31. The present embodiment does not limit the manner to achieve communication between the first concave part 314 and the through hole 313, as well as the manner to achieve communication between the first concave part 314 and the external space of the end cover 31.

Exemplarily, a first communication structure is formed on the first convex part 3121, which is used to communicate the first concave part 314 with the through hole 313. For example, the first communication structure may be a groove, hole, or other structure.

A second communication structure is formed on the second convex part 3122, which is used to communicate the first concave part 314 with the external space of the end cover 31. For example, the second communication structure may be a groove, hole, or other structure.

The protective sheet 34 can be connected only to the first convex part 3121, or only to the second convex part 3122, and can also be simultaneously connected to the first convex part 3121 and the second convex part 3122.

The surface of the first convex part 3121 away from the main body part 311 may be flush with the surface of the second convex part 3122 away from the main body part 311 or may not be flush with it. For example, in the thickness direction Z, the surface of the first convex part 3121 away from the main body part 311 may exceed the surface of the second convex part 3122 away from the main body part 311.

The present embodiment does not limit the depth of the first concave part 314. The first concave part 314 can be located as a whole within the protruding part 312 or recessed into the main body part 311.

During the production process of the battery unit, external impurities (such as metal particles, electrolyte, etc.) may remain on the main body part 311.

In the present embodiment, both the first convex part 3121 and the second convex part 3122 protrude from the main body part 311, and both can serve as a double layer protection together to reduce the risk of external impurities entering the through hole 313. The first concave part 314 communicates the through hole 313 with the external space of the end cover 31, which can ensure the accuracy of the airtightness detection of the battery unit. When external impurities accumulate or pass through the second convex part 3122 due to the vibration of the battery unit, the first concave part 314 can accommodate the external impurities passing through the second convex part 3122, thereby playing a storage function, increasing the difficulty of external impurities entering the through hole 313, reducing the risk of the corrosion of the pressure relief mechanism 33, and improving the safety.

In some embodiments, the protective sheet 34 is simultaneously attached to the first convex part 3121 and the second convex part 3122 to increase the connection strength between the protective sheet 34 and the end cover 31.

In some embodiments, the surface of the first convex part 3121 away from the main body part 311 is flush with the surface of the second convex part 3122 away from the main body part 311. The present embodiment facilitates the attachment of the protective sheet 34 to the first convex part 3121 and the attachment of the protective sheet 34 to the second convex part 3122.

In some embodiments, at least a portion of the first concave part 314 is recessed into the main body part 311. The present embodiment can increase the depth of the first concave part 314 to reserve more space for external impurities, increase the difficulty of external impurities entering the through hole 313, reduce the risk of the corrosion of the pressure relief mechanism 33, and improve the safety.

In some embodiments, the protective sheet 34 covers the first concave part 314 to reduce the risk of external impurities directly entering the first concave part 314.

In some embodiments, a first groove 3121a is provided on the surface of the first convex part 3121 away from the main body part 311, and the first groove 3121a is used to communicate the through hole 313 with the first concave part 314. A second groove 3122a is arranged on the surface of the second convex part 3122 away from the main body part 311, and the second groove 3122a is used to communicate the first concave part 314 with the external space of the end cover 31.

The first groove 3121a passes through the first convex part 3121. Exemplarily, the first groove 3121a extends from the inner side surface of the first convex part 3121 to the outer side surface of the first convex part 3121 to form an opening communicated with the through hole 313 on the inner side surface of the first convex part 3121, and an opening communicated with the first concave part 314 on the outer side surface of the first convex part 3121. The first groove 3121a can extend in a straight line, in a wavy shape, or in other shapes. The cross-section of the first groove 3121a perpendicular to the extension direction can be triangular, trapezoidal, rectangular, semicircular, or other shapes.

The second groove 3122a passes through the second convex part 3122. Exemplarily, the second groove 3122a extends from the inner side surface of the second convex part 3122 to the outer side surface of the second convex part 3122 to form an opening communicated with the first concave part 314 on the inner side surface of the second convex part 3122, and an opening communicated with the external space on the outer side surface of the second convex part 3122. The second groove 3122a can extend in a straight line, in a wavy shape, or in other shapes. The cross-section of the second groove 3122a perpendicular to the extension direction can be triangular, trapezoidal, rectangular, semicircular, or other shapes.

In the present embodiment, the first groove 3121a, the first groove 314, and the second groove 3122a form a channel that communicates the through hole 313 with the external space so as to facilitate air tightness detection of the battery unit 7. The first groove 3121a and the second groove 3122a are recessed from the top of the first convex part 3121 and the top of the second convex part 3122, respectively. This can ensure the distance between the first groove 3121a and the main body part 311 in the thickness direction Z, as well as the distance between the second groove 3122a and the main body part 311 in the thickness direction Z, reducing the risk of external impurities passing through the second groove 3122a and the first groove 3121a.

In some embodiments, in the thickness direction Z, the depth of the first groove 3121a and the depth of the second groove 3122a are both smaller than the depth of the first concave part 314.

In the present embodiment, the first concave part 314 has a larger depth, which can reserve more accommodating space for external impurities; The depth of the first groove 3121a and the depth of the second groove 3122a are both smaller, which can increase the difficulty for external impurities to pass through the first convex part 3121 and the second convex part 3122, and reduce the risk of external impurities entering the through hole 313.

The depth of the first groove 3121a is smaller than the depth of the first concave part 314, so that the bottom surface of the first groove 3121a will be higher than the bottom surface of the first concave part 314, and impurities accumulated on the bottom surface of the first concave part 314 do not flow into the first groove 3121a easily.

In some embodiments, the end cover 31 further includes a bending part 315 and a connecting part 316, and the bending part 315 surrounds on the outer side of the main body part 311 and extends in a direction facing the electrode assembly to form a second concave part 317 on the side of the main body part 311 facing the electrode assembly. The connecting part 316 surrounds on the outer side of the bending part 315, and the second concave part 317 is recessed relative to the surface of the connecting part 316 facing the electrode assembly. The connecting part 316 is used to connect with the shell.

The present embodiment can increase the internal space of the battery unit and improve the capacity of the battery unit by disposing a second concave part 317.

Fig. 10 is a structural schematic diagram of the protective sheet provided in some embodiments of the present application.

Please refer to Figs. 8 to 10 together. In some embodiments, the protective sheet 34 includes a base layer 341 and a bonding layer 342. The base layer 341 covers the through hole 313, and the bonding layer 342 is disposed on the surface of the base layer 341 facing the protruding part 312 and bonded to the first convex part 3121 and the second convex part 3122. The bonding layer 342 is not disposed in the area of the base layer 341 opposite the first groove 3121a in the thickness direction Z, and the bonding layer 342 is not disposed in the area of the base layer 341 opposite the second groove 3122a in the thickness direction Z.

The base layer 341 is used to block external impurities, and its material can be polyethylene terephthalate (PET), polypropylene (PP), or polycarbonate (PC), but is not limited to the above, and can be selected according to the need.

The bonding layer 342 is used to bond the base layer 341 to the first convex part 3121 and the second convex part 3122 to fix the base layer 341 on the end cover 31. The bonding layer 342 can include at least one of polyurethane, polyacrylate and styrene-butadiene layers, but is not limited to the above, and can be selected according to the need.

The bonding layer 342 and the first groove 3121a do not overlap in the thickness direction Z, and the bonding layer 342 and the second groove 3122a do not overlap in the thickness direction Z.

In order to reduce the risk of external impurities passing through the first groove 3121a and the second groove 3122a, the depth of the first groove 3121a and the second groove 3122a is relatively small; Based on its own characteristics, the bonding layer 342 may fill the first groove 3 121a or the second groove 3 122a, causing the first groove 3 121a or the second groove 3122a to be blocked, and affecting the airtightness detection of the battery unit.

In the present embodiment, the first groove 3121a is staggered with the bonding layer 342, and the second groove 3122a is staggered with the bonding layer 342, which can reduce the risk of the bonding layer 342 blocking the first groove 3121a and the second groove 3122a.

Exemplarily, the bonding layer 342 forms a gap 342a in a part corresponding to the first groove 3121a to avoid the first groove 3121a; The bonding layer 342 also forms a gap 342a in a part corresponding to the second groove 3122a to avoid the second groove 3122a.

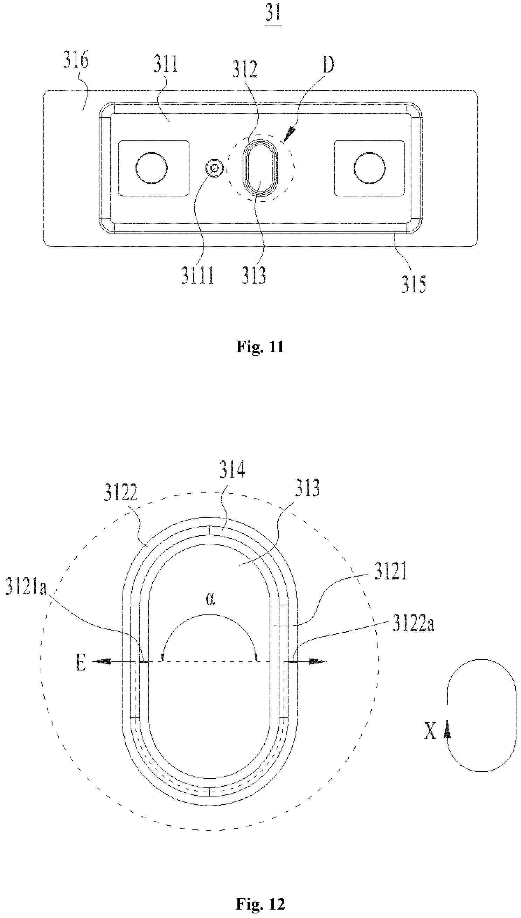

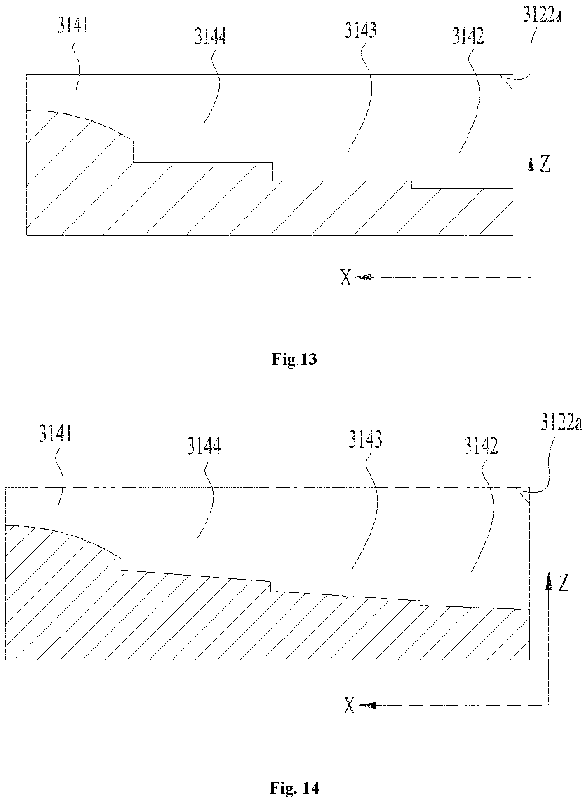

Fig. 11 is a top view schematic diagram of the end cover of the end cover assembly provided in some embodiments of the present application; Fig. 12 is an enlarged schematic diagram of Fig. 11 at circular frame D; Fig. 13 is a sectional schematic diagram taken along the section line E-E in Fig. 12.

As shown in Figs. 11 to 13, the first groove 3121a and the second groove 3122a are staggered in the circumferential direction X of the through hole 313.

The present embodiment can increase the distance between the first groove 3121a and the second groove 3122a in the circumferential direction X, extend the path for external impurities to move from the second groove 3122a to the first groove 3121a, and increase the difficulty for external impurities to enter the through hole 313.

In some embodiments, the staggered angle α between the first groove 3121a and the second groove 3122a in the circumferential direction X of the through hole 313 is 90 °-180 °. The angle α is the relative position of the first groove 3121a and the second groove 3122a characterized based on the central axis of the through hole 313.

Exemplarily, the angle α is 90 °, 120 °, 150 °, or 180 °.

In the present embodiment, the spacing between the first groove 3121a and the second groove 3122a in the circumferential direction X can be ensured, increasing the difficulty for external impurities to enter the through hole 313.

In some embodiments, the main body part 311 is provided with a liquid injection hole 3111 which is used to inject the electrolyte into the battery unit 7. The first groove 3121a is located between the through hole 313 and the liquid injection hole 3111. The second groove 3122a is located on a side of the through hole 313 away from the liquid injection hole 3111.

During the production process of the battery unit 7, the liquid injection device can inject the electrolyte into the interior of the battery unit 7 through the liquid injection hole 3111. During the liquid injection process, the electrolyte is in a high speed state, which poses a risk of sputtering towards the surroundings.

In the present embodiment, the second groove 3122a is arranged on the side of the through hole 313 away from the liquid injection hole 3111. In this way, the electrolyte splashed out from the liquid injection hole 3111 will be blocked by the second convex part 3122 and the protective sheet, making it difficult for the electrolyte to splash into the second groove 3122a, reducing the risk of electrolyte entering the through hole 313 and improving the safety of the battery unit.

In some embodiments, the battery unit further includes a sealing member (not shown), which is connected to the end cover 31 to seal the liquid injection hole 3111 after the process related to the liquid injection hole 3111 is completed.

In some embodiments, the first concave part 314 includes a first part 3141 and a second part 3142 arranged along the circumferential direction X of the through hole 313. The first part 3141 is used to communicate with the first groove 3121a, and the second part 3142 is used to communicate with the second groove 3122a. In the thickness direction Z, the depth of the first part 3141 is smaller than the depth of the second part 3142.

The first part 3141 and the second part 3142 can be directly communicated or indirectly communicated through the gas part of the first concave part 314.

The depth of the first part 3141 is smaller than the depth of the second part 3142, so the bottom surface of the first part 3141 is higher than the bottom surface of the second part 3142.

External impurities will first enter the second part 3142 through the second groove 3122a. Due to the depth of the second part 3142 being greater than the depth of the first part 3141, external impurities will first accumulate in the second part 3142, causing it does not directly enter the first part 3141 easily. This can increase the difficulty of external impurities entering the through hole 313 through the first groove 3121a, reduce the risk of corrosion of the pressure relief mechanism, and improve the safety.

In some embodiments, the first concave part 314 includes a third part 3143, which communicates the first part 3141 with the second part 3142. In the thickness direction Z, the depth of the third part 3143 is greater than the depth of the first part 3141 and less than the depth of the second part 3142.

In the circumferential direction X of the through hole 313, the third part 3143 is located between the first part 3141 and the second part 3142. The bottom surface of the third part 3143 is higher than the bottom surface of the second part 3142 and the bottom surface of the first part 3141.

In the present embodiment, the bottom surface of the first concave part 314 forms multi-level steps, which gradually increases the difficulty of impurities moving toward a direction close to the first groove 3121a within the first concave part 314, thereby reducing the difficulty of impurities entering the through hole 313 through the first groove 3121a, reducing the risk of the corrosion of the pressure relief mechanism 33, and improving the safety.

In some embodiments, the depth of at least a portion of the first part 3141 gradually decreases along a direction close to the first groove 3121a in the circumferential direction X of the through hole 313.

In the present embodiment, even if external impurities enter the first part 3141, the difficulty of moving toward a direction close to the first groove 3121a within the first part 3141 gradually increases, thereby reducing the difficulty of impurities entering the through hole 313 through the first groove 3121a, reducing the risk of the corrosion of the pressure relief mechanism 33, and improving the safety.

Exemplarily, the bottom surface of the first part 3141 may be inclined or curved.

In some embodiments, the first concave part 314 includes a fourth part 3144 which communicates the first part 3141 with the third part 3143. In the thickness direction Z, the depth of the fourth part 3144 is greater than the depth of the first part 3141 and less than the depth of the third part 3143.

In some embodiments, both the fourth part 3144 and the third part 3143 are disposed to be two. Exemplarily, the first part 3141, one fourth part 3144, one third part 3143, a second part 3142, another third part 3143, and another fourth part 3144 are arranged sequentially along the circumferential direction X to form a circular first concave part 314.

In some embodiments, the bottom surface of the second part 3142, the bottom surface of the third part 3143, and the bottom surface of the fourth part 3144 are all planar.

Fig. 14 is another cross-sectional schematic diagram taken along the section line E-E in Fig. 12.

As shown in Figs. 12 and 14, in some embodiments, the depth of at least a portion of the first concave part 314 gradually decreases in the direction close to the first groove 3121a in the circumferential direction X of the through hole 313.

In the present embodiment, even if external impurities enter the first concave part 314, the difficulty of external impurities moving in the direction close to the first groove 3121a in the first concave part 314 gradually increases, thereby reducing the difficulty of impurities entering the through hole 313 through the first concave part 314, reducing the risk of the corrosion of the pressure relief mechanism 33, and improving the safety.

In some embodiments, the depth of the third part 3143 gradually decreases in the direction close to the first groove 3121a in the circumferential direction X of the through hole 313.

In some embodiments, the depth of the fourth part 3144 gradually decreases in the direction close to the first groove 3121a in the circumferential direction X of the through hole 313.

In some embodiments, the depth of the end of the fourth part 3144 connected to the first part 3141 may be equal to the depth of the end of the first part 3141 connected to the fourth part 3144. The depth of the end of the fourth part 3144 connected to the third part 3143 can be equal to the depth of the end of the third part 3143 connected to the fourth part 3144. The depth of the end of the third part 3143 connected to the second part 3142 can be equal to the depth of the end of the second part 3142 connected to the third part 3143.

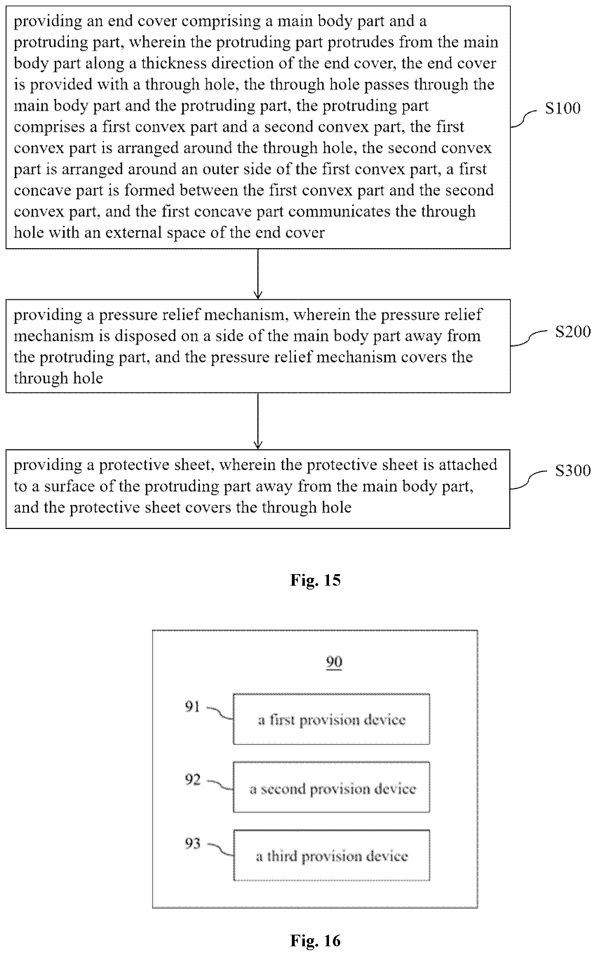

Fig. 15 is a flowchart of the manufacturing method provided in some embodiments of the present application.

As shown in Fig. 15, the manufacturing method of the end cover assembly of the present application embodiment includes:

At S100, an end cover is provided, which includes a main body part and a protruding part. The protruding part protrudes from the main body part along the thickness direction of the end cover, and the end cover is provided with a through hole. The through hole passes through the main body part and the protruding part, and the protruding part includes a first convex part and a second convex part. The first convex part is arranged around the through hole, the second convex part is arranged around the outer side of the first convex part, and a first concave part is formed between the first convex part and the second convex part, The first concave part communicates the through hole with the external space of the end cover;

At S200, a pressure relief mechanism is provided, and the pressure relief mechanism is disposed on a side of the main body part away from the protruding part, with the pressure relief mechanism covering the through hole;

At S300, a protective sheet is provided and the protective sheet is attached to the surface of the protruding part away from the main body part, with the protective sheet covering the through hole;

Wherein the pressure relief mechanism is configured to activate to release the internal pressure through the through hole when the internal pressure of the battery unit reaches a threshold.

It should be noted that the relevant structures of the end cover assembly manufactured by the manufacturing method of the end cover assembly mentioned above can be found in the end cover assembly provided in the above embodiments.

When manufacturing the end cover assembly based on the manufacturing method mentioned above, it is not necessary to follow the above steps in sequence. That is to say, the steps can be executed in the order mentioned in the embodiments, in a different order from the order mentioned in the embodiments, or several steps are executed simultaneously. For example, steps S200 and S300 can be executed in any order and can also be performed simultaneously.

Fig. 16 is a schematic block diagram of a manufacturing system of the end cover assembly provided in some embodiments of the present application.

As shown in Fig. 16, the manufacturing system 90 of the end cover assembly of the embodiments of the present application includes a first provision device 91, a second provision device 92, and a third provision device 93. The first provision device 91 is used to provide an end cover which includes a main body part and a protruding part. The protruding part protrudes from the main body part along the thickness direction of the end cover, and the end cover is provided with a through hole. The through hole passes through the main body part and the protruding part, and the protruding part includes a first convex part and a second convex part. The first convex part is arranged around the through hole, the second convex part is arranged around the outer side of the first convex part, and a first concave part is formed between the first convex part and the second convex part. The first concave part communicates the through hole with the external space of the end cover. The second provision device 92 is used to provide a pressure relief mechanism, and the pressure relief mechanism is arranged on a side of the main body part away from the protruding part, and the pressure relief mechanism covers the through hole. The third provision device 93 is used to provide a protective sheet and the protective sheet is attached to the surface of the protruding part away from the main body part, and the protective sheet covers the through hole. The pressure relief mechanism is configured to activate to release the internal pressure through the through hole when the internal pressure of the battery unit reaches a threshold.

The relevant structures of the end cover assembly manufactured by the above manufacturing system can be found in the end cover assembly provided in the above embodiments.

It should be noted that in the absence of conflicts, the embodiments and the features in the embodiments in the present application can be combined with each other.

Finally, it should be noted that the above embodiments are only used to illustrate the technical solution of the present application, but not to limit it; Although the present application has been described in detail with reference to the aforementioned embodiments, the skilled person in the art should understand that they can still modify the technical solutions recorded in the aforementioned embodiments or equivalently replace some of the technical features, but these modifications or substitutions do not make the essence of the corresponding technical solutions deviate from the spirit and scope of the technical solutions in the various embodiments of the present application.

## Claims

1. An end cover assembly for a battery unit, comprising:
an end cover comprising a main body part and a protruding part, wherein the protruding part protrudes from the main body part along a thickness direction of the end cover, and the end cover is provided with a through hole which passes through the main body part and the protruding part;
a pressure relief mechanism arranged on a side of the main body part away from the protruding part and covering the through hole, wherein the pressure relief mechanism is configured to activate to release internal pressure through the through hole when the internal pressure of the battery unit reaches a threshold; and
a protective sheet attached to a surface of the protruding part away from the main body part and covering the through hole;
wherein the protruding part comprises a first convex part and a second convex part, the first convex part is arranged around the through hole, the second convex part is arranged around an outer side of the first convex part, a first concave part is formed between the first convex part and the second convex part, and the first concave part communicates the through hole with an external space of the end cover.

2. The end cover assembly according to claim 1, wherein a first groove is provided on a surface of the first convex part away from the main body part, and the first groove is configured to communicate the through hole with the first concave part;
a second groove is provided on a surface of the second convex part away from the main body part, and the second groove is configured to communicate the first concave part with the external space of the end cover.

3. The end cover assembly according to claim 2, wherein in the thickness direction, a depth of the first groove and a depth of the second groove are both less than a depth of the first concave part.

4. The end cover assembly according to claim 2 or 3, wherein the first groove and the second groove are arranged to be staggered in a circumferential direction of the through hole.

5. The end cover assembly according to claim 4, wherein the first groove and the second groove are staggered at an angle of 90 °-180 ° in the circumferential direction of the through hole.

6. The end cover assembly according to claim 4 or 5, wherein the main body part is provided with a liquid injection hole for injecting electrolyte into the battery unit;
the first groove is located between the through hole and the liquid injection hole, and the second groove is located on a side of the through hole away from the liquid injection hole.

7. The end cover assembly according to any one of claims 2-6, wherein the protective sheet comprises a base layer and a bonding layer, wherein the base layer covers the through hole, and the bonding layer is arranged on a surface of the base layer facing the protruding part and bonded to the first convex part and the second convex part;
the bonding layer is not disposed in an area of the base layer opposite to the first groove in the thickness direction, and the bonding layer is not disposed in an area of the base layer opposite to the second groove in the thickness direction.

8. The end cover assembly according to any one of claims 2-6, wherein the first concave part comprises a first part and a second part arranged in the circumferential direction of the through hole, the first part is configured to be in communication with the first groove, and the second part is configured to be in communication with the second groove;
in the thickness direction, a depth of the first part is less than a depth of the second part.

9. The end cover assembly according to claim 8, wherein the first concave part comprises a third part which communicates the first part with the second part;
in the thickness direction, a depth of the third part is greater than the depth of the first part and less than the depth of the second part.

10. The end cover assembly according to claim 8 or 9, wherein a depth of at least a portion of the first part gradually decreases along a direction close to the first groove in the circumferential direction of the through hole.

11. The end cover assembly according to any one of claims 2-6, wherein a depth of at least a portion of the first concave part gradually decreases along a direction close to the first groove in the circumferential direction of the through hole.

12. The end cover assembly according to any one of claims 1-11, wherein a surface of the first convex part away from the main body part is flush with a surface of the second convex part away from the main body part.

13. The end cover assembly according to any one of claims 1-12, wherein at least a portion of the first concave part is recessed into the main body part.

14. The end cover assembly according to any one of claims 1-13, wherein the protective sheet covers the first concave part.

15. A battery unit, comprising:
a shell with an opening;
an electrode assembly housed within the shell; and
the end cover assembly according to any one of claims 1-14, wherein the end cover is configured to cover and close the opening, and the protruding part is located on a side of the main body part away from the electrode assembly.

16. A battery, comprising a plurality of the battery units according to any one of claims 1-15.

17. An electricity consuming apparatus comprising the battery unit according to any one of claims 1-15, wherein the battery unit is configured to provide electrical energy.

18. A manufacturing method for an end cover assembly, comprising steps of:
providing an end cover comprising a main body part and a protruding part, wherein the protruding part protrudes from the main body part along a thickness direction of the end cover, the end cover is provided with a through hole, the through hole passes through the main body part and the protruding part, the protruding part comprises a first convex part and a second convex part, the first convex part is arranged around the through hole, the second convex part is arranged around an outer side of the first convex part, a first concave part is formed between the first convex part and the second convex part, and the first concave part communicates the through hole with an external space of the end cover;
providing a pressure relief mechanism, wherein the pressure relief mechanism is disposed on a side of the main body part away from the protruding part, and the pressure relief mechanism covers the through hole;
providing a protective sheet, wherein the protective sheet is attached to a surface of the protruding part away from the main body part, and the protective sheet covers the through hole;
wherein the pressure relief mechanism is configured to activate to release internal pressure through the through hole when the internal pressure of the battery unit reaches a threshold.

19. A manufacturing system for an end cover assembly, comprising:
a first provision device for providing an end cover comprising a main body part and a protruding part, wherein the protruding part protrudes from the main body part along a thickness direction of the end cover, the end cover is provided with a through hole, the through hole passes through the main body part and the protruding part, the protruding part comprises a first convex part and a second convex part, the first convex part is arranged around the through hole, the second convex part is arranged around an outer side of the first convex part, a first concave part is formed between the first convex part and the second convex part, and the first concave part communicates the through hole with an external space of the end cover;
a second provision device for providing a pressure relief mechanism, wherein the pressure relief mechanism is disposed on a side of the main body part away from the protruding part, and the pressure relief mechanism covers the through hole;
a third provision device for providing a protective sheet, wherein the protective sheet is attached to a surface of the protruding part away from the main body part, and the protective sheet covers the through hole;
wherein the pressure relief mechanism is configured to activate to release internal pressure through the through hole when the internal pressure of the battery unit reaches a threshold.
